# FASCICULE DE BREVET EUROPEEN

(11) **EP 1 775 499 B1**
(45) Date de publication et mention de la délivrance du brevet: **23.04.2008**
(21) Numéro de dépôt: 06301026.8
(22) Date de dépôt: 06.10.2006
(51) Int. Cl.: F16H 57/04

(54) **Dispositif de lubrification d'au moins un engrenage d'une boîte de vitesses**
Schmiervorrichtung mindestens eines Zahnrades eines Getriebes
Lubrication device of at least one gear of a transmission

(30) Priorité: 12.10.2005 FR 0510417
(43) Date de publication de la demande: 18.04.2007
(73) Titulaire: Peugeot Citroen Automobiles SA, 78140 Vélizy-Villacoublay (FR)
(72) Inventeur: Chantreau, Marc, 14280 Authie (FR)

(56) Documents cités:
- EP-A- 1 389 697
- FR-A- 1 385 562
- FR-A- 2 751 726
- US-A- 3 529 698
- PATENT ABSTRACTS OF JAPAN vol. 008, no. 177 (M-317), 15 août 1984 (1984-08-15) -& JP 59 069568 A (NISSAN JIDOSHA KK), 19 avril 1984 (1984-04-19)
- PATENT ABSTRACTS OF JAPAN vol. 2003, no. 12, 5 décembre 2003 (2003-12-05) -& JP 2005 201316 A (TOYOTA MOTOR CORP), 28 juillet 2005 (2005-07-28)
- PATENT ABSTRACTS OF JAPAN vol. 2002, no. 05, 3 mai 2002 (2002-05-03) -& JP 2002 022095 A (MITSUBISHI HEAVY IND LTD), 23 janvier 2002 (2002-01-23)
- PATENT ABSTRACTS OF JAPAN vol. 008, no. 270 (M-344), 11 décembre 1984 (1984-12-11) -& JP 59 140962 A (AISHIN WARNER KK; others: 01), 13 août 1984 (1984-08-13)
- PATENT ABSTRACTS OF JAPAN vol. 1995, no. 11, 26 décembre 1995 (1995-12-26) -& JP 07 217725 A (TOYOTA MOTOR CORP), 15 août 1995 (1995-08-15)

## Description

La présente invention concerne un dispositif de lubrification d'au moins un engrenage d'une boîte de vitesses.

L'invention a trait plus particulièrement aux dispositifs de lubrification par gravité, dans lesquels les engrenages de la boîte de vitesses et une couronne d'un différentiel associé à cette boîte de vitesses sont agencés dans un boîtier de sorte qu'une huile lubrifiante, présente dans la partie basse du boîtier, est envoyée par la couronne de différentiel, lors de sa rotation, vers un réservoir de stockage temporaire situé à un niveau supérieur du boîtier, d'où l'huile s'écoule par gravité pour arroser les engrenages. La lubrification par gravité présente l'avantage de réduire les pertes motrices d'entraînement des engrenages de la boîte de vitesses puisque, en principe, le juste nécessaire d'huile est utilisé pour lubrifier ces engrenages. Ces dispositifs de lubrification améliorent donc le rendement de la boîte de vitesses et réduisent la consommation de carburant du véhicule équipé de cette boîte de vitesses, ainsi que, par conséquent, ses émissions de polluants. Des exemples de ce type de dispositif sont donnés dans US-A-3,529,698 et FR-A-2 751 726. US-A-3 529 698 est considéré comme étant l'état de la technique le plus proche.

Pour être optimale, la lubrification par gravité se doit de garantir une bonne alimentation du réservoir de stockage temporaire. Dans cet esprit, les dispositifs de US-A-3,529,698 et de FR-A-2 751 726 incluent, dans la partie haute de leur boîtier, des surfaces de guidage, vers l'intérieur du réservoir de stockage temporaire, de l'huile projetée par centrifugation par la portion haute de leur couronne de différentiel. Cependant, le bon fonctionnement de ces dispositifs nécessite que la denture périphérique de la couronne entraîne, lors de la rotation de cette dernière, une quantité suffisante d'huile pour, via le réservoir de stockage temporaire, lubrifier correctement les engrenages arrosés. Or, à faible régime de rotation de la couronne de différentiel ou lorsque le niveau d'huile diminue dans le boîtier au niveau de la portion basse de la couronne, par exemple à certains régimes transitoires de fonctionnement des engrenages, l'alimentation du réservoir se révèle généralement insuffisante même si l'huile projetée par la portion la plus haute de la denture est efficacement récupérée, sauf à prévoir dans le boîtier un excès d'huile ayant un effet négatif sur le rendement de la boîte de vitesses.

Le but de la présente invention est de proposer un dispositif de lubrification par gravité d'au moins un engrenage d'une boite de vitesses, qui, tout en optimisant le rendement de la boîte de vitesses, limite les risques d'alimentation insuffisante du réservoir de stockage temporaire, quelles que soient les contraintes de fonctionnement notamment liées au niveau d'huile dans le dispositif et/ou au régime de rotation des différents organes mobiles du dispositif.

A cet effet, l'invention a pour objet un dispositif de lubrification d'au moins un engrenage d'une boîte de vitesses, comprenant :
- un boîtier dans lequel circule un lubrifiant et dans lequel sont agencés le ou les engrenages à lubrifier et une couronne dentée à sa périphérie, notamment une couronne de différentiel, ce boîtier délimitant une zone de fond qui, en service, contient en permanence du lubrifiant dans lequel trempe une portion basse de la denture de la couronne,
- un réservoir de stockage temporaire de lubrifiant, adapté pour distribuer par gravité le lubrifiant qu'il contient afin d'arroser le ou les engrenages, et
- des moyens de guidage de lubrifiant vers le réservoir, adaptés pour alimenter le réservoir en lubrifiant provenant de la zone de fond lorsque la couronne est entraînée en rotation,
caractérisé en ce que les moyens de guidage comportent une goulotte de pompage de lubrifiant, rapportée et immobilisée dans le boîtier de manière à s'étendre essentiellement le long d'une portion de la denture, une extrémité longitudinale de la goulotte débouchant dans la zone de fond tandis que son extrémité longitudinale opposée est raccordée au réservoir.

Conformément à l'invention, le lubrifiant contenu dans la zone de fond du boîtier est efficacement envoyé jusqu'au réservoir de stockage temporaire, en étant pompé au moyen de la goulotte. Cet effet de pompage est obtenu par coopération de la goulotte avec la couronne dont la denture, lors de l'entraînement en rotation de la couronne, déplace, à l'intérieur et le long de la goulotte, du lubrifiant provenant de la zone de fond, ce lubrifiant étant piégé entre, d'une part, les dents adjacentes de la denture et, d'autre part, la paroi de la goulotte. Ce déplacement de lubrifiant provoque, par aspiration, une montée de lubrifiant dans la goulotte, jusqu'à l'extrémité supérieure de cette goulotte raccordée au réservoir. Pour accentuer cet effet de pompage, la goulotte est rapportée et immobilisée dans le boîtier au plus près de la denture. De cette façon, même à faible régime de rotation de la couronne ou même si le niveau de lubrifiant contenu dans le fond du boîtier correspond à un minimum fonctionnel, la goulotte guide efficacement une quantité de lubrifiant suffisante pour alimenter convenablement le réservoir de stockage temporaire.

Suivant d'autres caractéristiques avantageuses de ce dispositif, prises isolément ou suivant toutes les combinaisons techniquement possibles :
- suivant sa longueur, la goulotte est, en coupe transversale, ajustée de manière sensiblement complémentaire à la denture ;
- la section transversale de la goulotte est globalement en forme de U dont l'évidement reçoit la section transversale de la denture, les parois en regard de cette forme en U étant distantes d'une valeur sensiblement égale à la dimension axiale de la denture et présentant une hauteur, depuis la paroi centrale de la forme en U, supérieure à la dimension radiale de la denture ;
- le boîtier inclut un carter d'embrayage dans lequel le ou au moins un des engrenages est monté à rotation, et un couvercle de différentiel enveloppant une portion de la denture et rapporté sur le carter d'embrayage, la goulotte étant interposée entre cette portion de denture et le couvercle de différentiel ;
- la goulotte est munie d'éléments mâles de fixation au boîtier, adaptés pour coopérer par complémentarité de formes avec des zones femelles ménagées dans le boîtier ;
- la goulotte est rapportée et immobilisée sur le carter d'embrayage tandis que le couvercle de différentiel est muni d'au moins une nervure de blocage d'au moins un des éléments mâles de fixation dans sa zone femelle associée ménagée dans le carter d'embrayage ;
- la goulotte et ses éléments mâles de fixation sont réalisés d'une seule pièce en matière plastique ;
- la goulotte est réalisée en une tôle mécano-soudée ou en matière plastique sur laquelle sont rapportés les éléments mâles de fixation, choisis de préférence parmi des clips en matière plastique et des vis ;
- la goulotte est munie, à son extrémité longitudinale opposée à celle débouchant dans la zone de fond, de moyens de collecte du lubrifiant pompé par la goulotte, raccordés au réservoir ;
- les moyens de collecte comportent un tube collecteur s'étendant dans le prolongement rectiligne de l'extrémité correspondante de la goulotte et débouchant dans un conduit de raccordement au réservoir ;
- le réservoir est soit agencé, au moins en partie, à l'extérieur du boîtier, le dispositif comportant des moyens d'écoulement du lubrifiant distribué par le réservoir à travers une paroi de plafond du boîtier, soit intégré à l'intérieur du boîtier, au niveau d'une zone de plafond de ce boîtier.

L'invention sera mieux comprise à la lecture de la description qui va suivre, donnée uniquement à titre d'exemple et faite en se référant aux dessins sur lesquels :
- la figure 1 est une vue en perspective d'un dispositif de lubrification selon l'invention ; et
- les figures 2 et 3 sont des coupes d'une partie du dispositif, selon respectivement le plan II de la figure 1 et la ligne III-III de la figure 2.

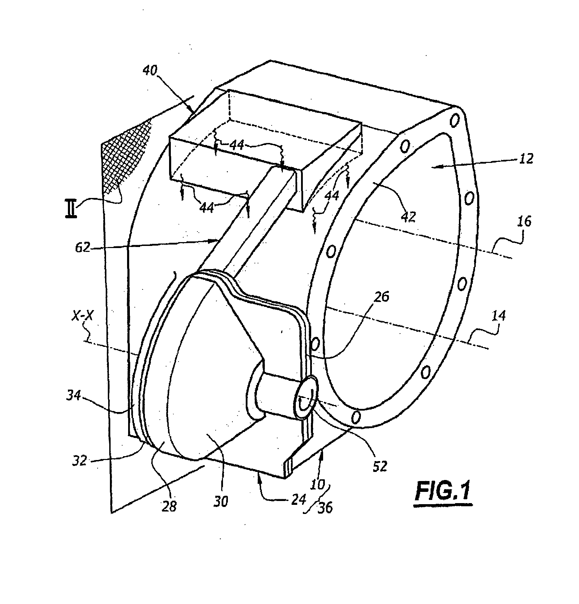

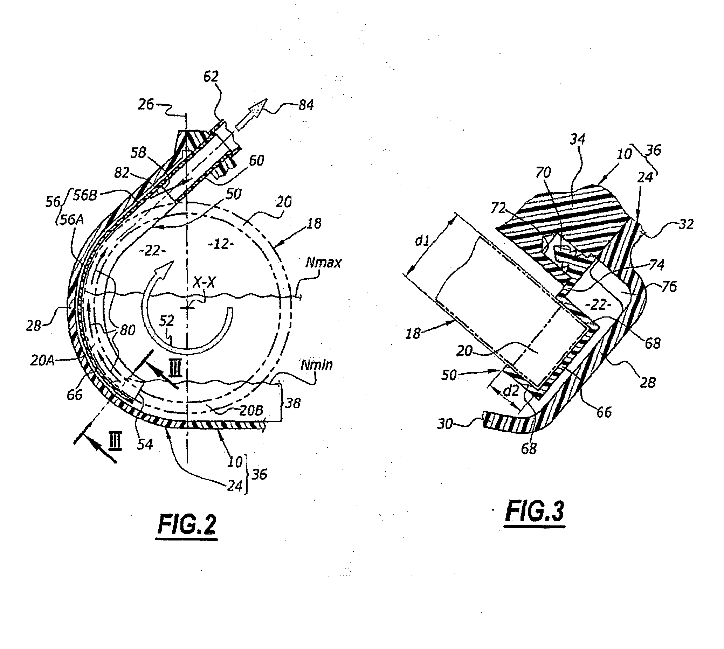

Sur les figures 1 à 3 est représentée, en partie, une boîte de vitesses d'un véhicule automobile, associée à un différentiel. Par commodité, la suite de la description sera orientée par rapport à cette boîte de vitesses dans sa position normale d'utilisation, c'est-à-dire dans sa configuration d'implantation dans un véhicule reposant sur une surface plane globalement horizontale, de sorte que les termes « inférieur » et « haut » désignent une direction dirigée vers la partie haute sur les figures 1 et 2, tandis que les termes « inférieur » et « bas » désignent une direction opposée. De même, le terme « vertical » désigne une direction sensiblement perpendiculaire à la surface sur laquelle repose le véhicule précité, le terme « horizontal » correspondant à une direction perpendiculaire à la verticale ainsi définie.

La boîte de vitesses comporte un carter 10 dit « d'embrayage », ménageant une cavité interne principale 12 dans laquelle sont prévus d'être montés à rotation des engrenages non représentés de la boîte de vitesses, notamment des engrenages qui forment deux trains d'axes respectifs horizontaux 14, 16 et destinés à établir entre eux, par embrayage mécanique, différents rapports de démultiplication.

La cavité 12 est prévue pour recevoir également une couronne rotative 18 appartenant au différentiel précité, représentée sur les figures 2 et 3 uniquement de manière schématique par des traits mixtes. Cette couronne se présente sous la forme d'une roue dentée de grand diamètre, dont l'axe de rotation X-X est parallèle aux axes 14 et 16, la denture périphérique 20 de cette couronne étant adaptée pour engrener l'un des engrenages de la boîte de vitesses. Seule une portion de la couronne 18, correspondant sensiblement à sa moitié par rapport à la verticale, est logée, à proprement parler, dans la cavité 12. L'autre moitié de la couronne est logée dans le volume libre 22 d'un couvercle de différentiel 24 rapporté de manière étanche sur le carter d'embrayage 10 en formant un plan de joint vertical 26 contenant l'axe X-X. Le couvercle 24 inclut une paroi 28 de recouvrement périphérique de la portion 20A de la denture 20 s'étendant au-delà du plan de joint 26 à l'extérieur de la cavité 12, cette paroi 28 se présentant essentiellement sous une forme tubulaire globalement hémicylindrique d'axe sensiblement confondu avec l'axe X-X lorsque le couvercle est assemblé au carter. D'un côté de la paroi 28, suivant l'axe X-X, le couvercle inclut une paroi 30 tronconique convergente en s'éloignant de la paroi 28, à l'extrémité de plus petit diamètre de laquelle est délimité, conjointement avec le carter 10 et de part et d'autre du plan 26, un passage pour un arbre rotatif non représenté lié cinématiquement à la couronne 18. De l'autre côté de la paroi 26, le couvercle 24 inclut une bride d'extrémité 32 globalement hémicylindrique d'axe X-X, solidarisée de manière étanche à un renflement complémentaire 34 du carter 10.

Pour lubrifier les engrenages de la boîte de vitesses et la couronne 18 du différentiel, le boîtier global externe 36, constitué par l'assemblage du carter d'embrayage 10 et du couvercle de différentiel 24, contient un lubrifiant, notamment une huile. Au repos, c'est-à-dire lorsque les engrenages et la couronne sont à l'arrêt, l'huile est stockée de façon stagnante dans la partie basse du boîtier 36, le niveau supérieur de cette huile étant référencé Nₘₐₓ sur la figure 2. En service, lorsque ces engrenages et cette couronne tournent, l'huile circule dans le boîtier de sorte que son niveau supérieur dans la partie basse du boîtier diminue, jusqu'à un niveau minimal Nₘᵢₙ correspondant à une quantité d'huile prédéfinie, stockée dans une zone de fond correspondante 38 du boîtier et dans laquelle la portion la plus basse 20B de la denture 20 trempe en permanence. On comprend ainsi que, en fonctionnement, la portion basse de la denture 20, ainsi qu'éventuellement une partie des engrenages de la boîte de vitesses, barbotent toujours dans de l'huile.

L'huilage des engrenages de la boîte de vitesses est également assuré par un réservoir 40 de stockage temporaire d'huile, situé au-dessus des engrenages. Ce réservoir est agencé à l'extérieur du carter 10 et repose sur une paroi de plafond 42 de ce carter. L'huile contenue dans le réservoir 40 en est évacué par gravité de manière à arroser de manière globalement verticale les engrenages de la boîte de vitesses, en s'écoulant à travers la paroi 42, par exemple par des orifices correspondants non visibles sur les figures, comme indiqué schématiquement par les flèches ondulées 44 à la figure 1. En service, de l'huile provenant du boîtier 36 alimente le réservoir, d'où elle est distribuée sur les engrenages, tandis que, au repos, le réservoir est vide.

Pour alimenter efficacement le réservoir 40, le boîtier 36 est équipé d'une goulotte allongée 50 qui s'étend le long de l'essentiel de la portion de denture 20A logée dans le couvercle 24, en étant globalement interposée entre cette portion de denture et la paroi 28 du couvercle. Cette goulotte est adaptée pour, lorsque la couronne 18 est entraînée en rotation autour de son axe X-X comme indiqué par la flèche 52, guider l'huile depuis la partie basse vers la partie haute du boîtier et elle comporte à cet effet, du bas vers le haut :
- une extrémité longitudinale inférieure 54 débouchant sensiblement au-dessous du niveau minimal d'huile Nₘᵢₙ, c'est-à-dire débouchant dans la zone de fond 38,
- une partie courante 56 s'étendant le long de la denture 20 et incluant à la fois une partie basse 56A en arc de cercle sensiblement centré sur l'axe X-X et une partie haute 56B sensiblement rectiligne et raccordée de manière tangentielle à la partie basse 56A, et
- une extrémité longitudinale supérieure 58 située sensiblement au-dessus de la couronne de différentiel 18 et au niveau de laquelle la goulotte 50 est munie d'un tube collecteur 60 s'étendant vers le haut, dans le prolongement rectiligne de la partie haute 56B.

Le tube collecteur 60 est raccordé directement au réservoir 40 par un conduit dédié 62 qui s'étend dans le prolongement rectiligne du tube 60.

En coupe transversale, la goulotte 50 présente une section globalement en forme de U, complémentaire de la section de la denture 20 et dont l'évidement interne est prévu pour être ajusté au plus près de cette denture. Plus précisément, comme représenté sur la figure 3, la goulotte comprend une paroi centrale 66 et deux parois latérales parallèles 68 qui s'étendent sensiblement perpendiculairement à la paroi 66, de manière à former, en coupe transversale, la forme en U précitée. Dans le boîtier 36, les parois 68 s'étendent dans des plans respectifs perpendiculaires à l'axe X-X, c'est-à-dire de manière parallèle aux flans latéraux de la couronne 18. Ces parois 68 sont prévues pour s'étendre au plus près de la denture 20, c'est-à-dire que la distance d₁ séparant, en coupe transversale, les surfaces en regard de ces parois est sensiblement égale à l'épaisseur axiale de la denture, à un jeu fonctionnel près compris entre 1 et 4 mm, de préférence égal à 2 mm. De plus, la hauteur d₂ de ces parois 68, c'est-à-dire leur dimension, en coupe transversale, entre leur extrémité libre et leur extrémité reliée à la paroi 66, est supérieure à la dimension radiale de la denture 20. Dans le boîtier 36, la denture 20 est reçue au fond de l'évidement délimité par la partie basse 56A de la goulotte, comme représenté à la figure 3, de sorte que, avec le dimensionnement d₂ indiqué ci-dessus et dans la mesure où, en coupe transversale, l'écartement entre la denture et la paroi 66, compris entre 1 et 3 mm, de préférence égal à 1 mm, est inférieur à la différence entre d₂ et la dimension radiale de la denture, la totalité de la section transversale de la denture est reçue dans l'évidement de la section en U de cette partie basse de goulotte. Au niveau de la partie haute 56B, l'écartement précité croît au fur et à mesure qu'on s'approche de l'extrémité supérieure 58, jusqu'à ce que la denture sorte de l'évidement de cette partie haute, à peu près au niveau de l'extrémité 58.

La goulotte 50 est rapportée et immobilisée sur le carter d'embrayage 10 au moyen de clips 70 solidaires de la goulotte et adaptés pour être introduits et retenus dans des trous borgnes correspondants 72 ménagés dans des parois du carter. Ainsi, dans le plan de la figure 3, un de ces clips est retenu dans un de ces trous, ménagé dans le renflement 34 du carter.

La goulotte 50 est réalisée en une matière plastique moulée et les clips 70 sont moulés d'une seule pièce avec la goulotte, ces clips étant par exemple situés à l'extrémité libre de pattes saillantes 74 venues de matière avec l'une des parois latérales 68 de la goulotte, comme représenté à la figure 3. Avantageusement, le tube collecteur 60 est également moulé d'un seul tenant avec la goulotte.

Pour maintenir fermement la goulotte 50 en place par rapport au carter 10 et éviter toute vibration de cette dernière, le couvercle de différentiel 24 comporte une ou plusieurs nervures 76 disposées sensiblement à l'aplomb d'au moins certains des clips de fixation 70. Ainsi, à la figure 3, une de ces nervures est formée dans la zone de liaison entre la paroi 28 et la bride 32 du couvercle 24, de manière à bloquer, suivant une direction radiale à l'axe X-X, les clips à l'intérieur du trou 72.

L'assemblage de la goulotte 50 s'effectue facilement grâce aux clips 70 : avant d'assembler le couvercle 24, la goulotte 50 est mise en place autour de la denture 20, en étant fixée au carter 10. Cette mise en place permet de contrôler visuellement le positionnement de la goulotte au plus près de la denture, sans que cette goulotte ne crée toutefois une gêne à la rotation de la couronne 18. Le couvercle 24 est ensuite solidarisé au carter 10, avec sa ou ses nervures 76 en butée de blocage vis-à-vis des clips 70.

En fonctionnement, lorsque la couronne de différentiel 18 est entraînée en rotation autour de son axe X-X selon la flèche 52, l'huile stockée dans la zone de fond 38 est pompée le long de la goulotte 50, comme indiqué par les flèches 80, par un effet d'aspiration résultant du positionnement au plus près de cette goulotte vis-à-vis de la denture 20. En effet, l'huile préalablement piégée entre les dents de la denture lors de son passage rotatif dans la zone de fond 38, y demeure pour l'essentiel le long de la goulotte, jusqu'à être projetée par centrifugation dans le collecteur 60, comme indiqué par la flèche 82. L'huile est ainsi efficacement entraînée de la zone de fond jusqu'au collecteur, qui alimente, via le conduit 62, le réservoir 40, comme indiqué par la flèche 84.

Divers aménagements et variantes au dispositif de lubrification par gravité décrit ci-dessus sont en outre envisageables. A titre d'exemples :
- plutôt que de prévoir une goulotte en matière plastique, cette goulotte peut être réalisée en une tôle mécano-soudée, les clips de fixation 70 étant alors rapportés à cette tôle ou remplacés par des vis de petit diamètre ;
- de manière plus générale, d'autres formes d'éléments mâles de fixation, que les clips 70, sont envisageables pour immobiliser la goulotte 50 vis-à-vis du carter d'embrayage 10, notamment des pions, des vis, des rivets, etc. ;
- plutôt que de fixer la goulotte 50 au carter d'embrayage 10, cette goulotte pourrait être fixée sur le couvercle de différentiel 24, ce type d'assemblage impliquant cependant une mise en place en aveugle de l'ensemble composé de la goulotte et de ce couvercle ;
- le réservoir de stockage temporaire 40 n'a pas nécessairement à être extérieur au carter 10, ce réservoir pouvant être intégré à l'intérieur du boîtier du dispositif, au niveau d'une zone de plafond de ce boîtier ; et/ou
- d'autres formes de moyens de collecte que le tube 60 sont envisageables, selon notamment la géométrie du carter d'embrayage 10.

## Revendications

1. Dispositif de lubrification d'au moins un engrenage d'une boîte de vitesses, comprenant :
- un boîtier (36) dans lequel circule un lubrifiant et dans lequel sont agencés le ou les engrenages à lubrifier et une couronne (18) dentée à sa périphérie, notamment une couronne de différentiel, ce boîtier délimitant une zone de fond (38) qui, en service, contient en permanence du lubrifiant dans lequel trempe une portion basse (20B) de la denture (20) de la couronne,
- un réservoir (40) de stockage temporaire de lubrifiant, adapté pour distribuer par gravité le lubrifiant qu'il contient afin d'arroser le ou les engrenages, et
- des moyens (50, 60, 62) de guidage de lubrifiant vers le réservoir (40), adaptés pour alimenter le réservoir en lubrifiant provenant de la zone de fond (38) lorsque la couronne (18) est entraînée en rotation,
**caractérisé en ce que** les moyens de guidage comportent une goulotte (50) de pompage de lubrifiant, rapportée et immobilisée dans le boîtier (36) de manière à s'étendre essentiellement le long d'une portion (20A) de la denture (20), une extrémité longitudinale (54) de la goulotte débouchant dans la zone de fond (38) tandis que son extrémité longitudinale opposée (58) est raccordée au réservoir (40).

2. Dispositif suivant la revendication 1, **caractérisé en ce que**, suivant sa longueur, la goulotte (50) est, en coupe transversale, ajustée de manière sensiblement complémentaire à la denture (20).

3. Dispositif suivant la revendication 2, **caractérisé en ce que** la section transversale de la goulotte (50) est globalement en forme de U dont l'évidement reçoit la section transversale de la denture (20), les parois en regard (68) de cette forme en U étant distantes d'une valeur (d₁) sensiblement égale à la dimension axiale de la denture et présentant une hauteur (d₂), depuis la paroi centrale (66) de la forme en U, supérieure à la dimension radiale de la denture.

4. Dispositif suivant l'une quelconque des revendications précédentes, **caractérisé en ce que** le boîtier (36) inclut un carter d'embrayage (10) dans lequel le ou au moins un des engrenages est monté à rotation, et un couvercle de différentiel (24) enveloppant une portion (20A) de la denture (20) et rapporté sur le carter d'embrayage, la goulotte (50) étant interposée entre cette portion de denture (20A) et le couvercle de différentiel.

5. Dispositif suivant l'une quelconque des revendications précédentes, **caractérisé en ce que** la goulotte (50) est munie d'éléments mâles (70) de fixation au boîtier (36), adaptés pour coopérer par complémentarité de formes avec des zones femelles (72) ménagées dans le boîtier.

6. Dispositif suivant les revendications 4 et 5 prises ensemble, **caractérisé en ce que** la goulotte (50) est rapportée et immobilisée sur le carter d'embrayage (10) et **en ce que** le couvercle de différentiel (24) est muni d'au moins une nervure (76) de blocage d'au moins un des éléments mâles de fixation (70) dans sa zone femelle associée (72) ménagée dans le carter d'embrayage.

7. Dispositif suivant l'une des revendications 5 ou 6, **caractérisé en ce que** la goulotte (50) et ses éléments mâles de fixation (70) sont réalisés d'une seule pièce en matière plastique.

8. Dispositif suivant une des revendications 5 ou 6, **caractérisé en ce que** la goulotte (50) est réalisée en une tôle mécano-soudée ou en matière plastique sur laquelle sont rapportés les éléments mâles de fixation (70), choisis de préférence parmi des clips en matière plastique et des vis.

9. Dispositif suivant l'une quelconque des revendications précédentes, **caractérisé en ce que** la goulotte (50) est munie, à son extrémité longitudinale (58) opposée à celle débouchant dans la zone de fond (38), de moyens (60) de collecte du lubrifiant pompé par la goulotte, raccordés au réservoir (40).

10. Dispositif suivant la revendication 9, **caractérisé en ce que** les moyens de collecte comportent un tube collecteur (60) s'étendant dans le prolongement rectiligne de l'extrémité correspondante (58) de la goulotte (50) et débouchant dans un conduit (62) de raccordement au réservoir (40).

11. Dispositif suivant l'une quelconque des revendications précédentes, **caractérisé en ce que** le réservoir (40) est soit agencé, au moins en partie, à l'extérieur du boîtier (36), le dispositif comportant des moyens (44) d'écoulement du lubrifiant distribué par le réservoir à travers une paroi de plafond (42) du boîtier, soit intégré à l'intérieur du boîtier, au niveau d'une zone de plafond de ce boîtier.

## Claims

1. Device for lubricating at least one gear wheel of a gearbox, comprising :
- a unit (36) in which circulates a lubricant and in which are arranged the gear wheel(s) to be lubricated and a ring gear (18) with teeth on its periphery, in particular a differential ring gear, this unit including a bottom area (38) which, in service, always contains some lubricant into which dips a lower portion (20B) of the teeth (20) of the ring gear;
- a reservoir (40) for temporary storage of lubricant, designed to distribute by gravity the lubricant which it contains in order to sprinkle the gear wheel(s); and
- means (50, 60, 62) of guiding lubricant towards the reservoir (40), designed to feed the reservoir with lubricant coming from the bottom area (38) when the ring gear (18) is made to rotate,
**characterized in that** the means of guiding include a channel (50) for pumping lubricant, attached and immobilized in the unit (36) so as to lie essentially along a portion (20A) of the teeth (20), one longitudinal end (54) of the channel running into the bottom area (38) while its opposite longitudinal end (58) is attached to the reservoir (40).

2. Device according to Claim 1, **characterized in that**, along its length, the transverse cross section of the channel (50) is made to fit the teeth (20) in a generally complementary manner.

3. Device according to Claim 2, **characterized in that** the transverse cross section of the channel (50) is generally in the shape of a U of which the open side accommodates the transverse cross section of the teeth (20), the facing walls (68) of this U shape being separated by a value (d₁) generally equal to the axial dimension of the teeth and having a height (d₂), from the central wall (66) of the U shape, greater than the radial dimension of the teeth.

4. Device according to any one of the preceding claims, **characterized in that** the unit (36) includes a clutch housing (10) in which the gear wheel or at least one of the gear wheels is mounted such that it can rotate, and a differential cover (24) enclosing a portion (20A) of the teeth (20) and attached to the clutch housing, the channel (50) being placed between this portion of teeth (20A) and the differential cover.

5. Device according to any one of the preceding claims, **characterized in that** the channel (50) is provided with male fasteners (70) for fastening to the unit (36), designed to cooperate by complementarity of shapes with female areas (72) made in the unit.

6. Device according to Claims 4 and 5 taken together, **characterized in that** the channel (50) is attached to and immobilized on the clutch housing (10) and **in that** the differential cover (24) is provided with at least one rib (76) for locking at least one of the male fasteners (70) in its related female area (72) made in the clutch housing.

7. Device according to one of Claims 5 or 6, **characterized in that** the channel (50) and its male fasteners (70) are made as a single plastic part.

8. Device according to one of Claims 5 or 6, **characterized in that** the channel (50) is made of a welded plate or plastic to which are attached the male fasteners (70), preferably selected from among plastic clips and screws.

9. Device according to any one of the preceding claims, **characterized in that** the channel (50) is provided, at its opposite longitudinal end (58) away from the one running into the bottom area (38), with means (60) of collecting the lubricant pumped by the channel, connected to the reservoir (40).

10. Device according to Claim 9, **characterized in that** the means of collecting include a collecting tube (60) lying along the rectilinear extension of the corresponding end (58) of the channel (50) and running into a connection pipe (62) connected to the reservoir (40).

11. Device according to any one of the preceding claims, **characterized in that** the reservoir (40) is either arranged, at least partly, outside the unit (36), the device including flow means (44) for the lubricant distributed by the reservoir to flow through a top wall (42) of the unit, or integrated inside the unit, in a top area of this unit.

## Patentansprüche

1. Schmiervorrichtung für mindestens ein Zahnrad eines Schaltgetriebes, die aufweist:
- ein Gehäuse (36), in dem ein Schmiermittel zirkuliert, und in dem das oder die zu schmierenden Zahnräder und ein an seinem Umfang gezahntes Rad (18), insbesondere ein Tellerrad, angeordnet sind, wobei dieses Gehäuse eine Bodenzone (38) begrenzt, die im Betrieb permanent Schmiermittel enthält, in das ein unterer Abschnitt (20B) der Zahnung (20) des Rads eingetaucht ist,
- ein Reservoir (40) zur vorübergehenden Lagerung von Schmiermittel, das geeignet ist, um durch Schwerkraft das Schmiermittel, das es enthält, zu verteilen, um das oder die Zahnräder zu bespritzen, und
- Mittel (50, 60, 62) zur Führung von Schmiermittel zum Reservoir (40), die geeignet sind, um das Reservoir mit Schmiermittel zu versorgen, das aus der Bodenzone (38) kommt, wenn das Rad (18) in Drehung versetzt wird,
**dadurch gekennzeichnet, dass** die Führungsmittel eine Rinne (50) zum Pumpen von Schmiermittel aufweisen, die in dem Gehäuse (36) so eingesetzt und blockiert ist, dass sie sich hauptsächlich entlang eines Abschnitts (20A) der Zahnung (20) erstreckt, wobei ein Längsende (54) der Rinne in der Bodenzone (38) mündet, während ihr entgegengesetztes Längsende (58) mit dem Reservoir (40) verbunden ist.

2. Vorrichtung nach Anspruch 1, **dadurch gekennzeichnet, dass** die Rinne (50) entlang ihrer Länge im Querschnitt im Wesentlichen komplementär zur Zahnung (20) angeglichen ist.

3. Vorrichtung nach Anspruch 2, **dadurch gekennzeichnet, dass** der Querschnitt der Rinne (50) global die Form eines U hat, dessen Vertiefung den Querschnitt der Zahnung (20) aufnimmt, wobei die gegenüberliegenden Wände (68) dieser U-Form einen Abstand einer Größe (d₁) im Wesentlichen gleich der axialen Abmessung der Zahnung und eine Höhe (d₂) ausgehend von der zentralen Wand (66) der U-Form größer als die radiale Abmessung der Zahnung haben.

4. Vorrichtung nach einem der vorhergehenden Ansprüche, **dadurch gekennzeichnet, dass** das Gehäuse (36) eine Kupplungsglocke (10), in der das oder mindestens eines der Zahnräder drehend montiert ist, und einen Differentialdeckel (24) umfasst, der einen Abschnitt (20A) der Zahnung (20) umhüllt und auf die Kupplungsglocke aufgesetzt ist, wobei die Rinne (50) zwischen diesen Zahnungsabschnitt (20A) und den Differentialdeckel eingefügt ist.

5. Vorrichtung nach einem der vorhergehenden Ansprüche, **dadurch gekennzeichnet, dass** die Rinne (50) mit Einsteckelementen (70) zur Befestigung am Gehäuse (36) versehen ist, die geeignet sind, um durch Form-Komplementarität mit Aufnahmezonen (72) zusammenzuwirken, die im Gehäuse ausgebildet sind.

6. Vorrichtung nach den Ansprüchen 4 und 5 zusammen gesehen, **dadurch gekennzeichnet, dass** die Rinne (50) auf die Kupplungsglocke (10) aufgesetzt und dort blockiert ist, und dass der Differentialdeckel (24) mit mindestens einer Blockierrippe (76) mindestens eines der Befestigungs-Einsteckelemente (70) in seiner zugeordneten Aufnahmezone (72) versehen ist, die in der Kupplungsglocke ausgebildet ist.

7. Vorrichtung nach einem der Ansprüche 5 oder 6, **dadurch gekennzeichnet, dass** die Rinne (50) und ihre Befestigungs-Einsteckelemente (70) aus einem Stück aus Kunststoffmaterial hergestellt sind.

8. Vorrichtung nach einem der Ansprüche 5 oder 6, **dadurch gekennzeichnet, dass** die Rinne (50) aus einem geschweißten Blech oder aus einem Kunststoffblech hergestellt ist, auf das die Befestigungs-Einsteckelemente (70) aufgebracht sind, ausgewählt vorzugsweise unter den Clips aus Kunststoff und den Schrauben.

9. Vorrichtung nach einem der vorhergehenden Ansprüche, **dadurch gekennzeichnet, dass** die Rinne (50) an ihrem Längsende (58) entgegengesetzt zu demjenigen, das in der Bodenzone (38) mündet, mit Sammelmitteln (60) für das von der Rinne gepumpte Schmiermittel versehen ist, die mit dem Reservoir (40) verbunden sind.

10. Vorrichtung nach Anspruch 9, **dadurch gekennzeichnet, dass** die Sammelmittel ein Sammelrohr (60) aufweisen, das sich in der geradlinigen Verlängerung des entsprechenden Endes (58) der Rinne (50) erstreckt und in einen Verbindungskanal (62) mit dem Reservoir (40) mündet.

11. Vorrichtung nach einem der vorhergehenden Ansprüche, **dadurch gekennzeichnet, dass** das Reservoir (40) entweder zumindest zum Teil außerhalb des Gehäuses (36) eingerichtet ist, wobei die Vorrichtung Mittel (44) für den Abfluss des vom Reservoir verteilten Schmiermittels durch eine Deckenwand (42) des Gehäuses hindurch aufweist, oder im Inneren des Gehäuses in Höhe einer Deckenzone dieses Gehäuses integriert ist.
